# EUROPÄISCHE PATENTANMELDUNG

(11) **EP 0 973 295 A2**
(43) Veröffentlichungstag der Anmeldung: **19.01.2000**
(21) Anmeldenummer: 99440190.9
(22) Anmeldetag: 09.07.1999
(51) Int. Cl.: H04L 12/18

(54) **Punkt-zu-Mehrpunkt Netzwerk**

(30) Priorität: 16.07.1998 DE 19831954
(71) Anmelder: ALCATEL, 75008 Paris (FR)
(72) Erfinder: Anhorn, Jürgen, 70806 Kornwestheim (DE)
(74) Vertreter: Menzietti, Domenico, Dipl.-Ing

(57) **Zusammenfassung**

Aufgabe der Erfindung ist es, ein Netzwerk zu schaffen, bei dem sowohl im fehlerfreien Fall als auch im Falle des Auftretens einer Störung eine optimierte Betriebsweise ermöglicht wird. Gelöst wird diese Aufgabe durch ein Punkt-zu-Mehrpunkt Netzwerk (NET), das insbesondere dadurch gekennzeichnet ist, daß es zwei als Unterzentralen ausgebildete und jeweils über eine Hauptleitung mit einer Zentrale (HE) verbundene Knoten (HUB3, HUB4) beinhaltet, die die von der Zentrale (HE) empfangenen Signale auf Reseveleitungen zur Verfügung stellen. Durch Aktivierung der Reserveleitungen nur für den Fall, daß auf den Hauptleitungen Störungen vorhanden sind, kann Leistung eingespart werden. Das Auftreten einer Störung in einer Hauptleitung wird von jedem betroffenen Knoten autark detektiert. Dadurch wird erreicht, daß die Knoten unabhängig von zusätzlichen Steuereinrichtungen, wie beispielsweise einem zentralen Schaltaufbau den Empfang und die Weiterleitung der Signale steuern können und die Reserveleitung nur im Falle einer Störung aktiviert wird.

## Beschreibung

Die Erfindung bezieht sich auf ein Punkt-zu-Mehrpunkt Netzwerk gemäß dem Oberbegriff des Patentanspruchs 1.

In Punkt-zu-Mehrpunkt Netzwerken, wie beispielsweise in einem Kabelverteilnetz mit oder ohne Rückkanal, werden Signale, z.B. Kabelfernsehsignale und/oder Telefonsignale, sog. cablephone, in der Regel von einer Zentrale über zwei separate optische Leitungen derart zu mehreren Knoten übertragen, daß jeder Knoten Signale aus beiden Leitungen empfängt. Jeder Knoten versorgt ein Koaxialkabelnetz mit einer Vielzahl von Endstellen. Eine derartige Netzstruktur ist aus der Firmenzeitschrift "telecom report" der Firma Siemens AG, Ausgabe 3/1996, Seiten 10 bis 13 bekannt.

Die zwei separaten optischen Leitungen sind vorgesehen, damit bei einer Störung, beispielsweise verursacht durch Leitungsbruch oder nicht ausreichende Verstärkung, einzelne Knoten nicht keine Signale mehr oder nur noch Signale mit verminderter Qualität empfangen. In jedem Knoten werden dazu mittels zweier Detektoren die ankommenden Signale beider Leitungen detektiert und über einen Schalter nur das Signal mit dem höheren Signalpegel weiterleitet.

Nachteilig bei diesen Netzwerken ist, daß stets beide optischen Leitungen mit einem hohen Signalpegel betrieben werden müssen, wodurch viel Leistung verschwendet wird, die das Netzwerk zudem schneller altern läßt.

In dem aus DE 19650088 bekannten Netzwerk laufen zwei mit einer Zentrale verbundene optische Leitungen in einen Schaltaufbau zusammen, der Signale nur weiterleitet, wenn eine Störung auf einer der beiden optischen Leitungen detektiert wird. Dadurch wird eine Reserveleitung nur aktiv geschaltet, wenn eine Störung vorliegt, so daß die Performance des Netzwerkes auf den fehlerfreien Fall optimiert werden kann. Nachteilig ist, daß ein separater Schaltaufbau benötigt wird und die Versorgung von Knoten im Störungsfall von dem Funktionieren des Schaltaufbaus abhängt.

Es ist daher eine Aufgabe der Erfindung, ein Netzwerk zu schaffen, bei dem sowohl im fehlerfreien Fall als auch im Falle des Auftretens einer Störung eine optimierte Betriebsweise ermöglicht wird.

Gelöst wird diese Aufgabe durch ein Netzwerk gemäß Patentanspruch 1. Das erfindungsgemäße Punkt-zu-Mehrpunkt Netzwerk ist insbesondere dadurch gekennzeichnet, daß es zwei als Unterzentralen ausgebildete und jeweils über eine Hauptleitung mit einer Zentrale verbundene Knoten beinhaltet, die die von der Zentrale empfangenen Signale auf Reseveleitungen zur Verfügung stellen. Durch Aktivierung der Reserveleitungen nur für den Fall, daß auf den Hauptleitungen Störungen vorhanden sind, kann Leistung eingespart werden. Das Auftreten einer Störung in einer Hauptleitung wird von jedem betroffenen Knoten autark detektiert. Dadurch wird erreicht, daß die Knoten unabhängig von zusätzlichen Steuereinrichtungen, wie beispielsweise einem zentralen Schaltaufbau den Empfang und die Weiterleitung der Signale steuern können und die Reserveleitung nur im Falle einer Störung aktiviert wird.

Vorteilhafte Ausgestaltungen sind den abhängigen Patentansprüchen zu entnehmen.

Im folgenden werden drei Ausführungsbeispiele der Erfindung unter Zuhilfenahme der Figuren 1 bis 6 beschrieben. Es zeigen:
- Fig. 1: ein schematische Darstellung eines ersten erfindungsgemäßen Netzwerks,
- Fig. 2: eine schematische Darstellung des Netzwerks aus Fig. 1 bei Auftreten einer Störung,
- Fig. 3: einen schematisch dargestellten Aufbau eines ersten erfindungsgemäßen Knotens für das Netzwerk aus Fig.1,
- Fig. 4: einen schematisch dargestellten Aufbau eines zweiten erfindungsgemäßen Knotens für das Netzwerk aus Fig. 1,
- Fig. 5: ein schematische Darstellung eines zweiten erfindungsgemäßen Netzwerks und
- Fig. 6: ein schematische Darstellung eines dritten erfindungsgemäßen Netzwerks.

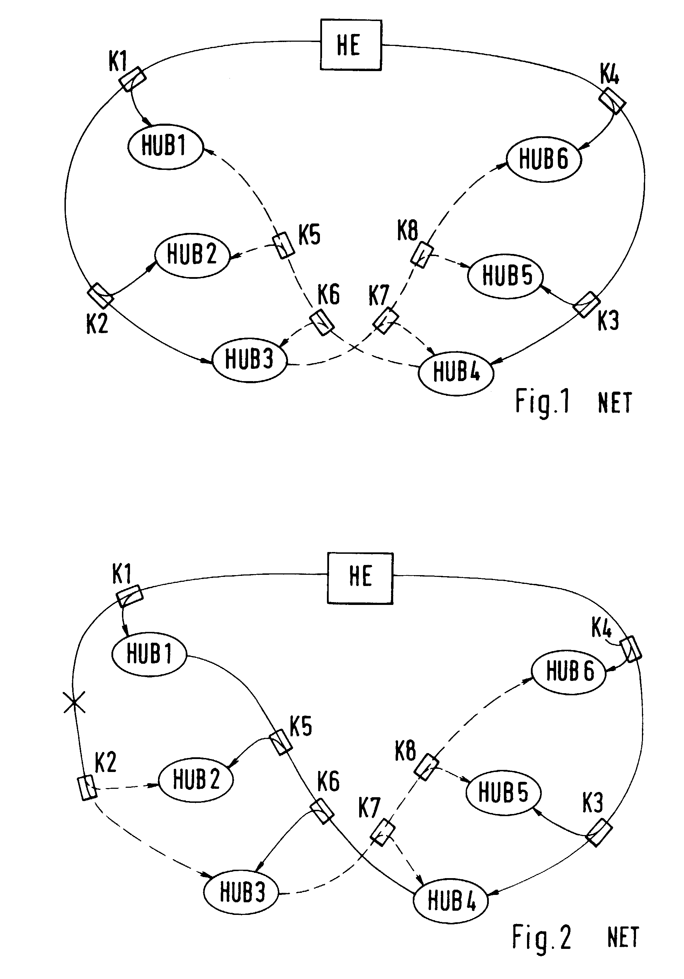

Das erste Ausführungsbeispiel wird nun unter Zuhilfenahme der Figuren 1 bis 4 erläutert. Fig. 1 zeigt ein erfindungsgemäßes Netzwerk NET. Das Netzwerk NET ist als Punkt-zu-Mehrpunkt Netzwerk und insbesondere als unidirektionales Verteilnetz ausgelegt, z.B. für das Verteilen von Kabelfernsehsignalen von einer Zentrale HE zu einer Vielzahl von aus Gründen der Übersichtlichkeit nicht dargestellten Endstellen. Das Netzwerk NET kann auf einfache Art und Weise auch in ein bidirektionales Netzwerk, z.B. mit einem über ein bestehendes Telefonnetz als Rückkanal, durch Verwendung von zwei unterschiedlichen Wellenlängen für ein und dierselbe optische Leitung oder einem zweiten Verteilnetz als Rückkanal umgewandelt werden, wodurch auch Dienste wie beispielsweise cablephone, Service-on-demand, Video-on-demand und/oder dergleichen realisierbar sind. Die Erfindung kann auf unidirektionale und bidirektionale Netzwerke angewendet werden. Aus Gründen der Übersichtlichkeit ist in Fig. 1 bezüglich der von der Zentrale HE ausgesandten Signale ein unidirektionales Verteilnetz gewählt.

Das Netzwerk NET beinhaltet neben der Zentrale HE, die auch als sog. Kopfstelle oder Head End bezeichnet wird, beispielhaft sechs Knoten HUB1, HUB2, HUB3, HUB4, HUB5, HUB6, die auch als Netzelemente bezeichnet werden.

Die Zentrale HE ist geeignet, Signale zu den sechs Knoten HUB1, HUB2, HUB3, HUB4, HUB5, HUB6 zu übertragen. Die Zentrale HE ist über eine erste Hauptleitung mit einem ersten, als Unterzentrale ausgebildeten Knoten HUB3 verbunden, der geeignet ist, Signale zu empfangen und über eine erste Reserveleitung weiterzuleiten. Die Zentrale HE ist ferner über eine zweite Hauptleitung mit einem zweiten, als Unterzentrale ausgebildeten Knoten HUB4 verbunden ist, der geeignet ist, Signale zu empfangen und über eine zweite Reserveleitung weiterzuleiten. Die erste Reserveleitung dient als Reserveleitung für die zweite Hauptleitung und die zweite Reserveleitung als Reserveleitung für die erste Hauptleitung. Jeder der sechs Knoten HUB1, HUB2, HUB3, HUB4, HUB5, HUB6 ist mit einer der beiden Hauptleitungen und der zugehörigen Reserveleitung verbunden.

Signale, z.B. Kabelfernsehsignale werden von der Zentrale HE aus über zwei verschiedene Wege zu den Knoten HUB1, HUB2, HUB3, HUB4, HUB5, HUB6 übertragen, wobei es für drei Knoten HUB1, HUB2, HUB3; HUB4, HUB5, HUB6 jeweils eine Hauptleitung und eine Reserveleitung gibt. Die drei Knoten HUB1, HUB2, HUB3 werden von der Zentrale HE über die erste Hauptleitung mit Signalen versorgt. Die erste Hauptleitung ist mit durchgezogenen Linien gezeichnet. Die drei Knoten HUB4, HUB5, HUB6 werden von der Zentrale HE über die zweite Hauptleitung mit Signalen versorgt. Die zweite Hauptleitung ist mit durchgezogenen Linien gezeichnet. Die drei Knoten HUB4, HUB5, HUB6 werden vom Knoten HUB3 über die erste Reserveleitung mit Signalen versorgt, wenn auf der zweiten Hauptleitung eine Störung auftritt. Die erste Reserveleitung ist mit gestrichelten Linien gezeichnet. Die drei Knoten HUB1, HUB2, HUB3 werden vom Knoten HUB4 über die zweite Reserveleitung mit Signalen versorgt, wenn auf der ersten Hauptleitung eine Störung auftritt. Die zweite Reserveleitung ist mit gestrichelten Linien gezeichnet.

An jeden Knoten HUB1, HUB2, HUB3, HUB4, HUB5, HUB6 ist ein aus Gründen der Übersichtlichkeit nicht dargestelltes Koaxialkabelnetz zur Verteilung der Kabelfernsehsignale zu einer Vielzahl von Endstellen angeschlossen.

Die beiden Hauptleitungen und die beiden Reserveleitungen sind als optische Leitungen ausgeführt. In die optischen Leitungen sind optische Koppeleinrichtungen K1, K2, K3, K4, K5, K6, K7, K8 eingeschleift, über die die sechs Knoten HUB1, HUB2, HUB3, HUB4, HUB5, HUB6 jeweils mit einer der beiden Hauptleitungen und der zugehörigen Reserveleitung verbunden sind. Als Koppeleinrichtung wird z.B. ein sog. optischer Splitter oder ein optischer Koppler verwendet. Z.B. kann ein 2x2 Splitter oder ein 2x2 Koppler verwendet werden. Mittels der Koppeleinrichtung werden Signale einer optischen Leitung z.B. dupliziert und in zwei unterschiedliche optische Leitungen weitergeleitet. Durch die Verwendung von asymmetrischen Koppeleinrichtungen können z.B. 30% des Signalpegels eines Signals einem Knoten und 70% des Signalpegels der nächsten Koppeleinrichtung zugeführt werden. Auf diese Weise erhalten alle Knoten HUB1, HUB2, HUB3, HUB4, HUB5, HUB6 Signale mit annähernd dem gleichen Signalpegel.

In die erste Hauptleitung sind die Koppeleinrichtungen K1 und K2 eingeschleift. Koppeleinrichtung K1 koppelt Signale für Knoten HUB1 aus, Koppeleinrichtung K2 für Knoten HUB2. In die zweite Hauptleitung sind die Koppeleinrichtungen K3 und K4 eingeschleift. Koppeleinrichtung K3 koppelt Signale für Knoten HUB5 aus, Koppeleinrichtung K4 für Knoten HUB6. In die erste Reserveleitung sind die Koppeleinrichtungen K7 und K8 eingeschleift. Koppeleinrichtung K7 koppelt Signale für Knoten HUB4 aus, Koppeleinrichtung K8 für Knoten HUB5. In die zweite Reserveleitung sind die Koppeleinrichtungen K5 und K6 eingeschleift. Koppeleinrichtung K5 koppelt Signale für Knoten HUB2 aus, Koppeleinrichtung K6 für Knoten HUB3.

Fig. 2 zeigt das Netzwerk aus Fig. 1 bei Auftreten einer Störung auf der ersten Hauptleitung zwischen der Koppeleinrichtung K1 und der Koppeleinrichtung K2. Aufgrund der Störung, z.B. hervorgerufen durch einen Kabelbruch, können Signale nun nicht mehr über die erste Hauptleitung zu Knoten HUB2 und HUB3 weitergeleitet werden. Der Knoten HUB2 detektiert, daß er keine Signale oder Signale mit unzureichender Qualität empfängt und schaltet um, um Signale vom Knoten HUB4 über die zweite Reserveleitung zu empfangen. Ebenso detektiert Knoten HUB3, daß er keine Signale oder Signale mit unzureichender Qualität empfängt und schaltet um, um Signale vom Knoten HUB3 über die zweite Reserveleitung zu empfangen. Der Knoten HUB1 wird somit weiterhin über die erste Hauptleitung von der Zentrale HE direkt mit Signalen versorgt, während den Knoten HUB2, HUB3, HUB4, HUB5, HUB6 die Signale von der Zentrale HE über die zweite Hauptleitung bzw. über die zweite Reserveleitung zugeleitet werden, was in Fig. 2 durch die durchgezogenen Linien angedeutet ist.

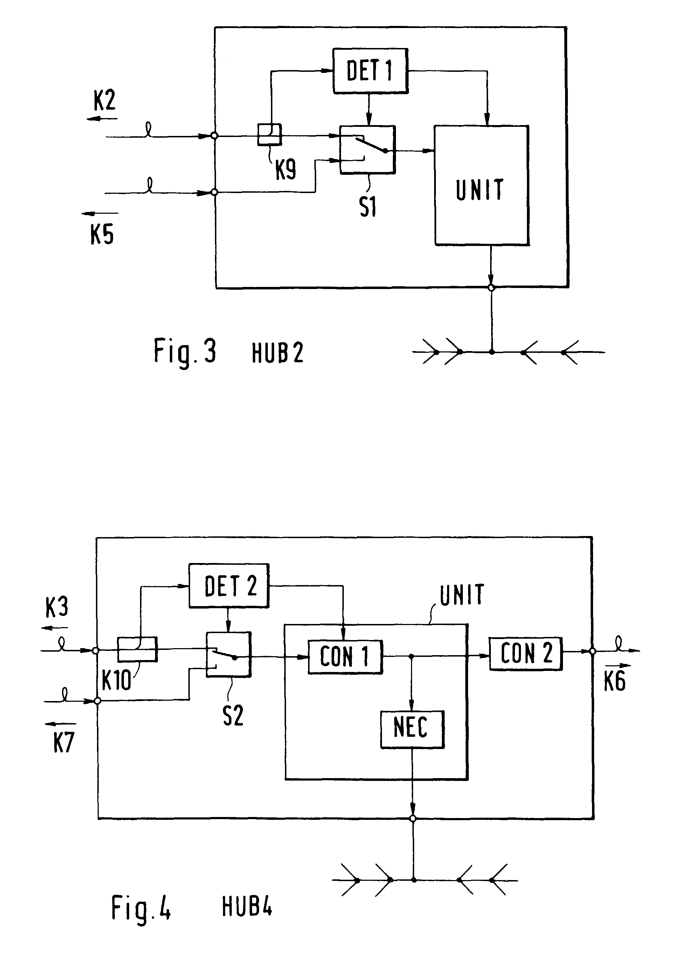

Fig. 3 zeigt nun einen ersten erfindungsgemäßen Knoten für das Netzwerk aus Fig.1. Dargestellt ist Knoten HUB2. Der Aufbau und die Funktionsweise der Knoten HUB1, HUBS, HUB6 ist vergleichbar demjenigen von HUB2.

Der Knoten HUB2 beinhaltet eine Umsetzeinrichtung UNIT, einen Detektor DET1 zur Überwachung der über die erste Hauptleitung und die Koppeleinrichtung K2 empfangenen Signale und einen über den Detektor DET1 ansteuerbaren Schalter S1. Der Detektor DET1 steuert den Schalter S1 derart an, daß für den Fall, daß die über die erste Hauptleitung empfangenen Signale störungsfrei empfangen werden der Schalter S1 die über die erste Hauptleitung empfangenen Signale zur Umsetzeinrichtung UNIT weiterleitet und für den Fall, daß die über die erste Hauptleitung empfangenen Signale störungsbehaftet empfangen werden der Schalter S1 die über die zweite Reserveleitung empfangenen Signale zur Umsetzeinrichtung UNIT weiterleitet.

Der Detektor DET1 beinhaltet beispielsweise einen Optisch/Elektrisch-Umsetzer, z.B. eine Photodiode, und einen nachgeschalteten Schwellenwertdetektor oder Komparator. Der Detektor DET1 stellt fest, ob der Pegel der über die erste Hauptleitung und die Koppeleinrichtung K2 empfangenen Signale ausreichend hoch ist, z.B. um alle Endstellen des nachfolgenden Koaxialkabelnetzes zu versorgen. Ist dies der Fall, so liegt ein störungsfreier Empfang vor und der Schalter S1 wird vom Detektor DET1 derart angesteuert, daß die über die erste Hauptleitung und die Koppeleinrichtung K2 empfangenen Signale zur Umsetzeinrichtung UNIT weitergeleitet werden. Liegt der Pegel der über die erste Hauptleitung und die Koppeleinrichtung K2 empfangenen Signale unterhalb der vorgegebenen Schwelle, so liegt ein störungsbehafteter Empfang vor und der Schalter S1 wird vom Detektor DET1 derart angesteuert, daß die über die zweite Reserveleitung und die Koppeleinrichtung K5 empfangenen Signale zur Umsetzeinrichtung UNIT weitergeleitet werden. Liegt der Pegel der über die erste Hauptleitung und die Koppeleinrichtung K2 empfangenen Signale zu einem späteren Zeitpunkt wieder oberhalb der vorgegebenen Schwelle, so wird zurückgeschaltet.

Der Detektor DET1 hat einen Eingang und zwei Ausgänge. Der Knoten HUB2 hat eine Koppeleinrichtung K9, die derart in die erste Hauptleitung eingeschleift ist, daß sie einen Teil der empfangenen Signale, z.B. 10% des Signalpegels, auskoppelt und dem Eingang des Detektors DET1 zuführt. Ein Ausgang des Detektors DET1 ist mit dem Steuereingang des Schalters S1 verbunden, der andere Ausgang mit der Umsetzeinrichtung UNIT. Die Verbindung zwischen Detektor DET1 und Umsetzeinrichtung UNIT dient dazu, die Umsetzeinrichtung UNIT darüber zu informieren, zu welchen Zeitpunkten eine Störung auf der ersten Hauptleitung vorhanden ist, damit die Umsetzeinrichtung UNIT weitere Schritte, z.B. Aussendung eines Anforderungs- bzw. Unterbrechungsssignals, unternehmen kann.

Der Schalter S1 ist als optischer Schalter ausgeführt, z.B. als elektrisch ansteuerbares optisches Mach-Zehnder Interferometer. Der Schalter S1 hat zwei Signaleingänge, einen Steuereingang und einen Ausgang. Ein Signaleingang ist über die Koppeleinrichtung K9 mit der ersten Hauptleitung verbunden, der andere Signaleingang mit der zweiten Reserveleitung. Der Ausgang ist mit der Umsetzeinrichtung UNIT verbunden.

Die Umsetzeinrichtung UNIT beinhaltet einen Optisch/Elektrisch-Umsetzer, um die empfangenen optischen Signale in elektrische umzusetzen und anschließend über das entsprechende Koaxialkabelnetz weiterzuleiten. Die Umsetzeinrichtung UNIT kann zusätzlich noch einen Verstärker, einen Protokolladapter, Filter, Entzerrer, usw. enthalten.

Die Umsetzeinrichtung UNIT beinhaltet ferner eine Sendeeinrichtung zum Aussenden eines Anforderungssignals über die zweite Reserveleitung. Während des störungsfreien Empfangs wird die Weiterleitung der von der Zentrale HE empfangenen Signale über die erste Reserveleitung vom Knoten HUB4 unterdrückt, um Leistung einzusparen. Anstelle der von der Zentrale empfangenen Signale werden vom Knoten HUB4 beispielsweise kein Signal oder Pollingsignale über die erste Reserveleitung ausgesandt. Die Pollingsignale sind z.B. Bursts mit einer bestimmten Kennung, die u.a. vom Knoten HUB2 empfangen werden. Im störungsfreien Fall sendet der Knoten HUB2 zum Knoten HUB4 z.B. kein Signal oder ein Antwortsignal mit dem Inhalt: Keine Weiterleitung der von der Zentrale HE ausgesandten Signale erforderlich. Nach Detektion einer Störung sendet der Knoten HUB2 zum Knoten HUB4 das Anforderungssignal. Das Anforderungssignal hat den Inhalt: Weiterleitung der von der Zentrale HE ausgesandten Signale erbeten. Der Knoten HUB4 empfängt das Anforderungssignal und schaltet daraufhin die zweite Reserveleitung aktiv, d.h. er leitet die von der Zentrale HE empfangenen Signale über die zweite Reserveleitung zum Knoten HUB2 weiter, damit dieser auch bei einer störungsbehafteten ersten Hauptleitung Signale der Zentrale HE empfangen kann.

Die Umsetzeinrichtung UNIT beinhaltet ferner eine Sendeeinrichtung zum Aussenden eines Unterbrechungssignals über die zweite Reserveleitung beinhaltet. Das Unterbrechungssignal hat den Inhalt: Weiterleitung der von der Zentrale ausgesandten Signale nicht mehr erforderlich. Der Knoten HUB4 empfängt das Unterbrechungssignal und schaltet daraufhin die zweite Reserveleitung passiv, d.h. er leitet die von der Zentrale empfangenen Signale über die zweite Reserveleitung zum Knoten HUB2 nicht mehr weiter.

Die zweite Reserveleitung ist zur Kommunikation der Knoten HUB1, HUB2, HUB3 mit Knoten HUB4 zum bidirektionalen Betrieb ausgelegt. Zusätzlich können beiden Hauptleitungen und/oder die beiden Reserveleitungen zum bidirektionalen Betrieb ausgelegt sind. Der bidirektionale Betrieb der ersten Reserveleitung dient der Kommunikation der Knoten HUB4, HUB5, HUB6 mit Knoten HUB3. Der bidirektionale Betrieb der Hauptleitungen kann dazu dienen die Zentrale HE darüber zu informieren, daß einer der beiden Knoten HUB3, HUB4 die von der Zentrale HE empfangenen Signale weiterleitet. Zum einen kann die Zentrale HE daraufhin die Aussendung der Signale mit einem höheren Signalpegel vornehmen, damit auch die bei der Übertragung über die Reserveleitungen von der Zentrale HE entferntesten Knoten HUB1 ; HUB6 mit einem genügend hohen Signalpegel versorgt werden. Zum anderen wird die Zentrale HE darüber informiert, daß an einer Stelle im Netz eine Störung aufgetreten ist und kann z.B. daraufhin eine Ortung der Störung durch Abfrage der Knoten, die mit der störungsbehafteten Hauptleitung verbunden sind durchführen. Die Störung liegt zwischen den Knoten, die der Zentrale HE antworten und denen, die der Zentrale HE nicht antworten. Die Störung ist somit lokalisiert und es können Maßnahmen zur Behebung der Störung getroffen werden, z.B. Beauftragung eines Monteurs. Die Umsetzeinrichtung UNIT beinhaltet dazu z.B. eine Sendeeinrichtung zum Aussenden eines Antwortsignals über die erste Hauptleitung.

Fig. 4 zeigt nun einen zweiten erfindungsgemäßen Knoten für das Netzwerk aus Fig.1. Dargestellt ist Knoten HUB4. Der Aufbau und die Funktionsweise des Knotens HUB4 ist vergleichbar demjenigen von HUB3.

Der Knoten HUB4 beinhaltet eine Umsetzeinrichtung UNIT, einen Detektor DET2 zur Überwachung der über die zweite Hauptleitung empfangenen Signale und einen über den Detektor DET2 ansteuerbaren Schalter S2. Der Detektor DET2 steuert den Schalter S2 derart an, daß für den Fall, daß die über die zweite Hauptleitung empfangenen Signale störungsfrei empfangen werden der Schalter S2 die über die zweite Hauptleitung empfangenen Signale zur Umsetzeinrichtung UNIT weiterleitet und für den Fall, daß die über die zweite Hauptleitung empfangenen Signale störungsbehaftet empfangen werden der Schalter S2 die über die erste Reserveleitung empfangenen Signale zur Umsetzeinrichtung UNIT weiterleitet.

Der Knoten HUB4 beinhaltet zusätzlich eine Sende-/Empfangseinrichtung, die als Konzentrator CON2 ausgebildet ist und derart ausgestaltet ist, daß sie die über die zweite Hauptleitung empfangenen Signale nur nach Erhalt eines Anforderungssignals über die zweite Reserveleitung weiterleitet. (Ebenso beinhaltet Knoten HUB3 eine Sende-/Empfangseinrichtung, die derart ausgestaltet ist, daß sie die über die erste Hauptleitung empfangenen Signale nur nach Erhalt eines Anforderungssignals über die erste Reserveleitung weiterleitet.)

Die Sende-/Empfangseinrichtung des Knotens HUB4 ist derart ausgestaltet, daß sie nach Erhalt eines Unterbrechungssignals die Weiterleitung der über die zweite Hauptleitung empfangenen Signale über die zweite Reserveleitung unterbricht.

Für Erläuterungen betreffend das Aussenden der Anforderungs- und Unterbrechungssignale und den damit verbundenen Verfahren wird aus die Beschreibung zu Fig. 3 verwiesen.

Die Umsetzeinrichtung UNIT beinhaltet einen Konzentrator CON1 und eine Netzelementsteuerung NEC. Der Konzentrator CON1 beinhaltet einen Optisch/Elektrisch-Umsetzer, um die empfangenen optischen Signale in elektrische umzusetzen und anschließend der Netzelementsteuerung NEC zuzuführen. Zusätzlich kann der Konzentrator CON1 einen Protokollumsetzer beinhalten, um die empfangenen Signale in ein vorgegebenes Format umzusetzen. Die Netzelementsteuerung NEC dient dazu, die empfangenen Signale elektrisch zu verarbeiten, z.B. eine Protokollanpassung durchzuführen und die Signale zu verstärken, und anschließend über das entsprechende Koaxialkabelnetz weiterzuleiten.

Dem Konzentrator CON2 werden die Ausgangssignale des Konzentrators CON1 zugeführt. Der Konzentrator CON2 hat einen Elektrisch/Optisch-Umsetzer, um die vom Konzentrator CON1 empfangenen Signale in optische umzusetzen und anschließend über die erste Reserveleitung weiterzuleiten, für den Fall, daß die erste Hauptleitung störungsbehaftet ist. Mittels eines elektrischen oder optischen Verstärkers oder Regenerators können die auszusendenden Signale vor der Aussendung verstärkt oder regeneriert werden. Der Konzentrator CON2 hat ferner einen Optisch/Elektrisch-Umsetzer, um die Anforderungs- und Unterbrechungssignale der Knoten HUB1, HUB2, HUB3 zu empfangen und in elektrische umzusetzen, die dann einer Auswerteeinrichtung, z.B. einem Prozessor zugeführt werden.

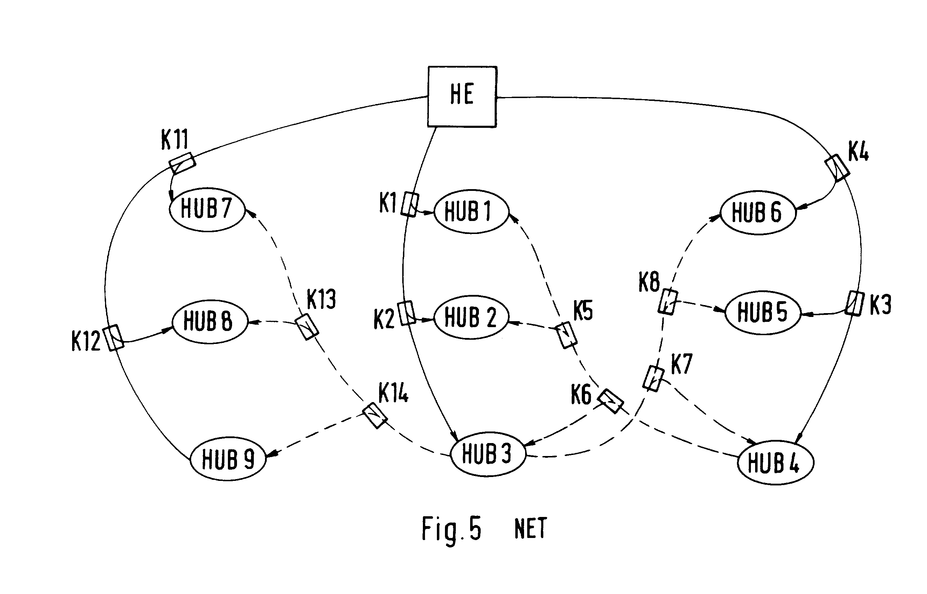

Das zweite Ausführungsbeispiel wird nun unter Zuhilfenahme der Figur 5 erläutert. Fig. 5 zeigt ein weiteres erfindungsgemäßes Netzwerk NET. Das Netzwerk NET ist als Punkt-zu-Mehrpunkt Netzwerk ausgelegt und gleicht in seinem Aufbau und seiner Funktionsweise dem Netzwerk aus Fig. 1 mit dem Unterschied, daß zusätzlich die Zentrale HE über eine dritte Hauptleitung mit drei weiteren Knoten HUB7, HUB8, HUB9 verbunden ist, und daß eine dritte Reserveleitung als Reserveleitung für die drei weiteren Knoten HUB7, HUB8, HUB9 dient, wobei der Knoten HUB3 oder der Knoten HUB4 geeignet ist, die von der Zentrale HE empfangenen Signale über die dritte Reserveleitung weiterzuleiten. Anstelle der dritten Reserveleitung kann auch die erste oder die zweite Reserveleitung als Reserveleitung für den mindestens einen weiteren Knoten HUB7, HUB8, HUB9 dienen, indem über eine weitere Koppeleinrichtung ein Teil des Signalpegels aus der entsprechenden Reserveleitung ausgekoppelt und den drei Knoten HUB7, HUB8, HUB9 zugeführt wird. Dies hat den Vorteil, daß nur ein, als Unterzentrale ausgebildeter Knoten für zwei Reserveleitungen benötigt wird.

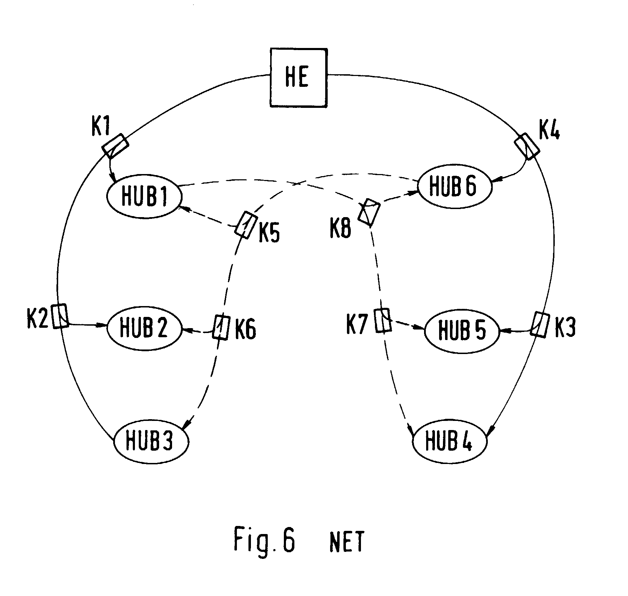

Das dritte Ausführungsbeispiel wird nun unter Zuhilfenahme der Figur 6 erläutert. Fig. 6 zeigt ein weiteres erfindungsgemäßes Netzwerk NET. Das Netzwerk NET ist als Punkt-zu-Mehrpunkt Netzwerk ausgelegt und gleicht in seinem Aufbau und seiner Funktionsweise dem Netzwerk aus Fig. 1 mit dem Unterschied, daß anstelle der Knoten HUB3, HUB4 die Knoten HUB1, HUB2 als Unterzentralen ausgebildet sind. Dies hat den Vorteil, daß weniger Kabel bei der Erweiterung des Netzes benötigt wird, da z.B. bei der Hinzufügung eines weiteren Knotens nach dem Knoten HUB3 lediglich eine Koppeleinrichtung zwischen Koppeleinrichtung K2 und Knoten HUB3, eine Koppeleinrichtung zwischen Koppeleinrichtung K6 und Knoten HUB3 sowie die Verbindungen von diesen zwei neuen Koppeleinrichtungen zum weiteren Knoten benötigt werden. Beim Netzwerk aus Fig. 1 hingegen würde eine Koppeleinrichtung zwischen Koppeleinrichtung K6 und Knoten HUB3 zu einer Kaskadierung von zwei Koppeleinrichtungen führen, was negative Auswirkungen auf die Signalpegelverteilung hätte.

Bei allen drei Ausführungsbeispielen sollten in der Praxis die Haupt- und Reserveleitungen derart verlegt werden, daß kürzere Entfernungen zwischen Zentrale HE und Knoten für den störungsfreien Fall realisiert werden können, d.h. die Hauptleitungen kürzer sind als die Reserveleitungen, denn bei kürzeren Entfernungen können aufgrund der niedrigeren Dämpfungsverluste höhere Signalpegel realisiert werden oder bei gleichen Signalpegeln Leistung eingespart werden.

## Patentansprüche

1. Punkt-zu-Mehrpunkt Netzwerk (NET), das eine Zentrale (HE) beinhaltet, die geeignet ist, Signale zu mehreren Knoten (HUB1, HUB2, HUB3, HUB4, HUB5, HUB6) zu übertragen,
**dadurch gekennzeichnet,**
daß die Zentrale (HE) über eine erste Hauptleitung mit einem ersten, als Unterzentrale ausgebildeten Knoten (HUB3; HUB1) verbunden ist, der geeignet ist, Signale zu empfangen und über eine erste Reserveleitung weiterzuleiten, daß die Zentrale (HE) über eine zweite Hauptleitung mit einem zweiten, als Unterzentrale ausgebildeten Knoten (HUB4; HUB6) verbunden ist, der geeignet ist, Signale zu empfangen und über eine zweite Reserveleitung weiterzuleiten, wobei die erste Reserveleitung als Reserveleitung für die zweite Hauptleitung und die zweite Reserveleitung als Reserveleitung für die erste Hauptleitung dient, und daß jeder der mehreren Knoten (HUB1, HUB2, HUB3, HUB4, HUB5, HUB6) mit einer der beiden Hauptleitungen und der zugehörigen Reserveleitung verbunden ist.

2. Punkt-zu-Mehrpunkt Netzwerk (NET) nach Anspruch 1, dadurch gekennzeichnet, daß die beiden Hauptleitungen und die beiden Reserveleitungen als optische Leitungen ausgeführt sind, und daß in die optischen Leitungen optische Koppeleinrichtungen (K1, K2, K3, K4, K5, K6, K7, K8) eingeschleift sind, über die die mehreren Knoten (HUB1, HUB2, HUB3, HUB4, HUB5, HUB6) jeweils mit einer der beiden Hauptleitungen und der zugehörigen Reserveleitung verbunden sind.

3. Punkt-zu-Mehrpunkt Netzwerk (NET) nach Anspruch 1 oder 2, dadurch gekennzeichnet, daß die beiden Hauptleitungen und/oder die beiden Reserveleitungen zum bidirektionalen Betrieb ausgelegt sind.

4. Punkt-zu-Mehrpunkt Netzwerk (NET) nach Anspruch 1, dadurch gekennzeichnet, daß jeder der mehreren Knoten (HUB1, HUB2, HUB3, HUB4, HUB5, HUB6) eine Umsetzeinrichtung (UNIT), einen Detektor (DET1) zur Überwachung der über die entsprechende Hauptleitung empfangenen Signale und einen über den Detektor (DET1) ansteuerbaren Schalter (S1) beinhaltet, und daß der Detektor (DET1) den Schalter (S1) derart ansteuert, daß für den Fall, daß die über die entsprechende Hauptleitung empfangenen Signale störungsfrei empfangen werden der Schalter (S1) die über die entsprechende Hauptleitung empfangenen Signale zur Umsetzeinrichtung (UNIT) weiterleitet und für den Fall, daß die über die entsprechende Hauptleitung empfangenen Signale störungsbehaftet empfangen werden der Schalter (S1) die über die entsprechende Reserveleitung empfangenen Signale zur Umsetzeinrichtung (UNIT) weiterleitet.

5. Punkt-zu-Mehrpunkt Netzwerk (NET) nach Anspruch 4, dadurch gekennzeichnet, daß die Umsetzeinrichtung (UNIT) eine Sendeeinrichtung zum Aussenden eines Anforderungssignals über die entsprechende Reserveleitung beinhaltet.

6. Punkt-zu-Mehrpunkt Netzwerk (NET) nach Anspruch 5, dadurch gekennzeichnet, daß die Umsetzeinrichtung (UNIT) eine Sendeeinrichtung zum Aussenden eines Unterbrechungssignals über die entsprechende Reserveleitung beinhaltet.

7. Punkt-zu-Mehrpunkt Netzwerk (NET) nach einem der Ansprüche 1 bis 4 , dadurch gekennzeichnet, daß der erste und der zweite Knoten (HUB3; HUB1; HUB4; HUB6) jeweils eine Umsetzeinrichtung (UNIT), einen Detektor (DET2) zur Überwachung der über die entsprechende Hauptleitung empfangenen Signale und einen über den Detektor (DET2) ansteuerbaren Schalter (S2) beinhaltet, und daß der Detektor (DET2) den Schalter (S2) derart ansteuert, daß für den Fall, daß die über die entsprechende Hauptleitung empfangenen Signale störungsfrei empfangen werden der Schalter (S2) die über die entsprechende Hauptleitung empfangenen Signale zur Umsetzeinrichtung (UNIT) weiterleitet und für den Fall, daß die über die entsprechende Hauptleitung empfangenen Signale störungsbehaftet empfangen werden der Schalter (S2) die über die entsprechende Reserveleitung empfangenen Signale zur Umsetzeinrichtung (UNIT) weiterleitet.

8. Punkt-zu-Mehrpunkt Netzwerk (NET) nach Anspruch 7, dadurch gekennzeichnet, daß der erste Knoten (HUB3; HUB1) eine Sende/Empfangseinrichtung beinhaltet, die derart ausgestaltet ist, daß sie die über die erste Hauptleitung empfangenen Signale nur nach Erhalt eines Anforderungssignals über die erste Reserveleitung weiterleitet, und daß der zweite Knoten (HUB4; HUB6) eine Sende-/Empfangseinrichtung beinhaltet, die derart ausgestaltet ist, daß sie die über die zweite Hauptleitung empfangenen Signale nur nach Erhalt eines Anforderungssignals über die zweite Reserveleitung weiterleitet.

9. Punkt-zu-Mehrpunkt Netzwerk (NET) nach Anspruch 8, dadurch gekennzeichnet, daß die Sende-/Empfangseinrichtung des ersten Knotens (HUB3; HUB1) derart ausgestaltet ist, daß sie nach Erhalt eines Unterbrechungssignals die Weiterleitung der über die erste Hauptleitung empfangenen Signale über die erste Reserveleitung unterbricht, und daß die Sende-/Empfangseinrichtung des zweiten Knotens (HUB4; HUB6) derart ausgestaltet ist, daß sie nach Erhalt eines Unterbrechungssignals die Weiterleitung der über die zweite Hauptleitung empfangenen Signale über die zweite Reserveleitung unterbricht.

10. Punkt-zu-Mehrpunkt Netzwerk (NET) nach Anspruch 1, dadurch gekennzeichnet, daß die Zentrale (HE) über eine dritte Hauptleitung mit mindestens einem weiteren Knoten (HUB7, HUB8, HUB9) verbunden ist, und daß die erste Reserveleitung als Reserveleitung für den mindestens einen weiteren Knoten (HUB7, HUB8, HUB9) dient.

11. Punkt-zu-Mehrpunkt Netzwerk (NET) nach Anspruch 1, dadurch gekennzeichnet, daß die Zentrale (HE) über eine dritte Hauptleitung mit mindestens einem weiteren Knoten (HUB7, HUB8, HUB9) verbunden ist, und daß eine dritte Reserveleitung als Reserveleitung für den mindestens einen weiteren Knoten (HUB7, HUB8, HUB9) dient, wobei der erste Knoten (HUB3; HUB1) geeignet ist, die von der Zentrale (HE) empfangenen Signale über die dritte Reserveleitung weiterzuleiten.
